Europäisches Patentamt

European Patent Office

Office européen des brevets

(19)

(11) Publication number : **0 506 421 A1**

## (12) EUROPEAN PATENT APPLICATION

(21) Application number : **92302659.5**

(22) Date of filing : **26.03.92**

(51) Int. Cl.$^5$ : **B28B 1/32, E04F 21/12, C04B 40/00, C04B 18/14**

(30) Priority : **27.03.91 NO 911274**

(43) Date of publication of application :
**30.09.92 Bulletin 92/40**

(84) Designated Contracting States :
**AT CH DE ES FR GB GR IT LI**

(71) Applicant : **ELKEM A/S**
**Nydalsveien 28**
**N-0483 Oslo 4 (NO)**

(72) Inventor : **Herfurth, Eike**
**Buro Allensbach, Lindenweg 5, Postfach 145**
**W-7753 Allensbach 2 (DE)**

(74) Representative : **Rees, David Christopher et al**
**Kilburn & Strode 30 John Street**
**London WC1N 2DD (GB)**

(54) **Method for shotcreting.**

(57)   A method of dry shotcreting in which a dry cementitious composition (1) is combined with a mixture of water and silica fume at a spray nozzle (5). A silica fume composition is added to the water to form a slurry (9) of silica fume and water, and a mixture of curing accelerator and water (12) is added to the slurry of silica fume and water. The resulting slurry (8) and the dry composition (2) are combined at the spray nozzle (5).

EP 0 506 421 A1

The present invention relates to a method for shotcreting.

Shotcreting is a process for pneumatically projecting mortar or concrete at high velocity onto a surface structure. In a dry shotcrete process, all ingredients except water and sometimes liquid accelerators, are mixed in the dry state and the mix is conveyed by an air stream through hoses or pipes to a spray nozzle where water is added and the mix, including water, is thrown towards the structure to be covered.

One of the disadvantages in the shotcrete process is the very high rebound loses which are experienced. When using ordinary concrete mixtures, the rebound losses for the dry shotcrete process may exceed 40% by weight of the total amount of concrete sprayed onto a surface. Furthermore, by using ordinary concrete mixtures, the layer thickness in one pass is limited to about 5cm or lower.

US Patent No. 4,931,098 discloses a method for adding silica fume to dry shotcrete process. According to this system, the silica fume is added together with the water supplied to the dry mixture in the spray nozzle. The silica fume used in this method consists of extremely fine, spherical silica particles containing approximately 90% by weight of $SiO_2$. The specific surface area is between 15 and $30m^2/g$ and the particles have a diameter between 0.1 and 0.2um. This silica fume is obtained from off-gases from electric furnaces used for the production of silicon ferrosilicon, but can also be obtained by the reduction of $SiO_2$ to $SiO$-gas and reoxidation of $SiO$ in air.

In the method disclosed in US 4,931,098, a reduction in rebound losses of between 5 to 10% is obtained. Also, the thickness of the concrete layer which can be sprayed in one pass is substantially increased.

In some applications of dry shotcreting, it is desirable to add curing accelerators to the concrete mixture in order to obtain a fast curing of the sprayed concrete. For instance, when dry shotcreting is used in tunnel building, the time required to develop sufficient strength in the sprayed concrete can be a limiting factor in the propagation speed for the tunnel. Normally, in a dry shotcreting process, curing accelerators are dosed into the water in the water pipe leading to the spray nozzle.

When this conventional method of adding curing accelerators was tried in the method described in US 4,931,098, it was observed when adding a slurry of silica fume and water to a mixture of water and accelerator, a gel was immediately formed which blocked the water pipe or at least blocked the holes in the water ring in the spray nozzle. This conventional way of adding a curing accelerator can thus not b used when silica fume is mixed into the water pipe containing a mixture of accelerator and water. In order to avoid this blocking of the water pipe or the water ring, it has up until now been necessary either to use a second water ring in the spray nozzle for separate feeding of a liquid accelerator to the dry mix or to add the curing accelerator to the silica fume slurry before the silica fume slurry is added to the water pipe.

These two ways of adding curing accelerators have, however, disadvantages and drawbacks. Using a separate second water ring for adding water and curing accelerator complicates the process and makes the system inflexible. In addition, it has been found that the mixtures of water and silica fume which enters into the spray nozzle through the first water ring may reach the holes in the second water ring where the mixture of water and accelerator is added.

On the other hand, if the curing accelerator is added to the slurry of silica fume and water before the slurry is added to the water pipe, it is not possible to adjust the amount of curing accelerator during the shotcreting process and in addition, floculation of this slurry has been observed which tends to block the holes in the water ring.

In is an object of the present invention to provide a method for adding curing accelerator in a dry shotcreting process where a mixture of water and silica fume can be added to a dry mix in the spray nozzle in a simple way without disturbing the shotcreting process.

According to the present invention, there is provided a method for dry shotcreting in which a dry cementitious composition is combined with a mixture of water and silica fume at a spray nozzle, which comprises adding a silica fume composition to the water to form a slurry of silica fume and water, adding a mixture of curing accelerator and water to the slurry of silica fume and water, and combining the resulting slurry and dry composition at the spray nozzle.

It was surprisingly found that when the curing accelerator was added to the slurry of silica fume and water, no gelling took place. The mixture of silica fume, water and curing acclerator formed in this way flows through the water pipe and the holes in the water ring without any gelling or disturbance of the flow. Furthermore, this way of adding curing accelerator makes it easy to adjust the amount of added accelerator during the shotcreting process.

As the curing accelerator, any conventional concrete curing accelerator may be used. Examples of such curing accelerators include sodium aluminate, potassium aluminate or mixtures thereof, sodium hydroxide, potassium hydroxide, sodium silicate or water glass and sodium carbonate. Preferably, a mixture of sodium aluminate and potassium aluminate are used as the curing accelerator.

The amount of accelerator added will be different for the different accelerators and has to be established by simple tests. For sodium aluminate and potassium aluminate or mixture thereof, the amount of accelerator added will generally be in the range between 1 and 10% by weight, preferably between 4 and 7% by weight, based on the weight of cement in the final shotcrete mixture.

The present invention may be carried into practice in various ways and one embodiment will now be described by way of example with reference to the accompanying drawings, in which:-

Figure 1 is a schematic view of a dry shotcrete method according to the present invention; and

Figure 2 is a cross-sectional view of the water-ring to an enlarged scale, taken along line I-I in Figure 1.

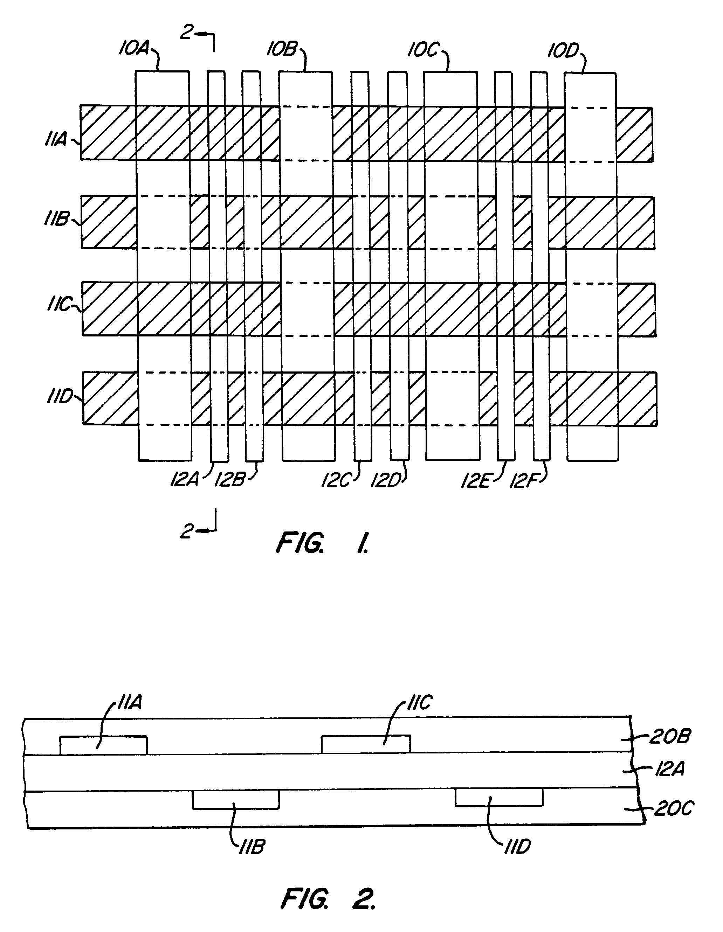

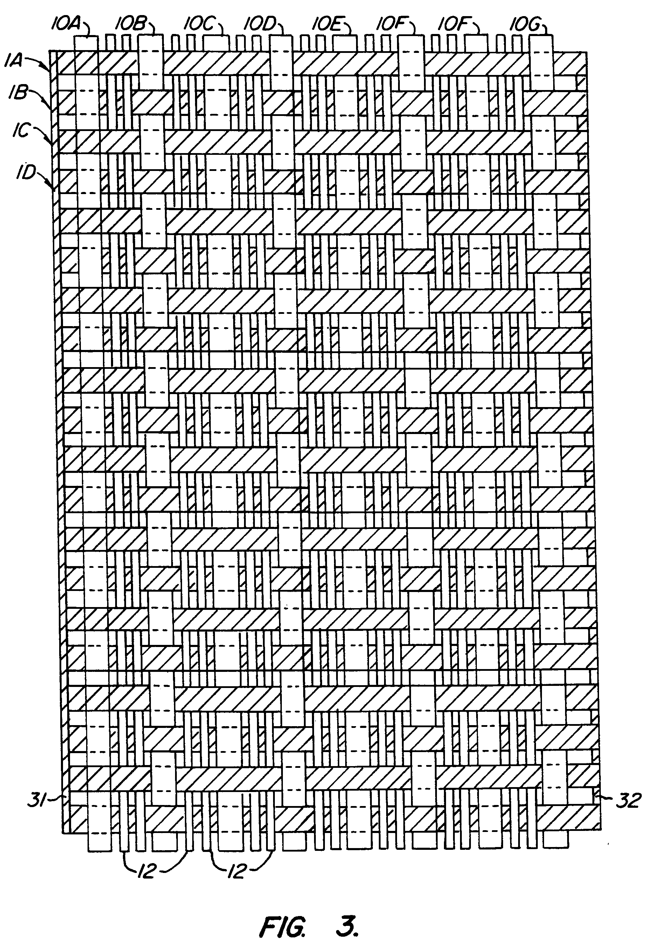

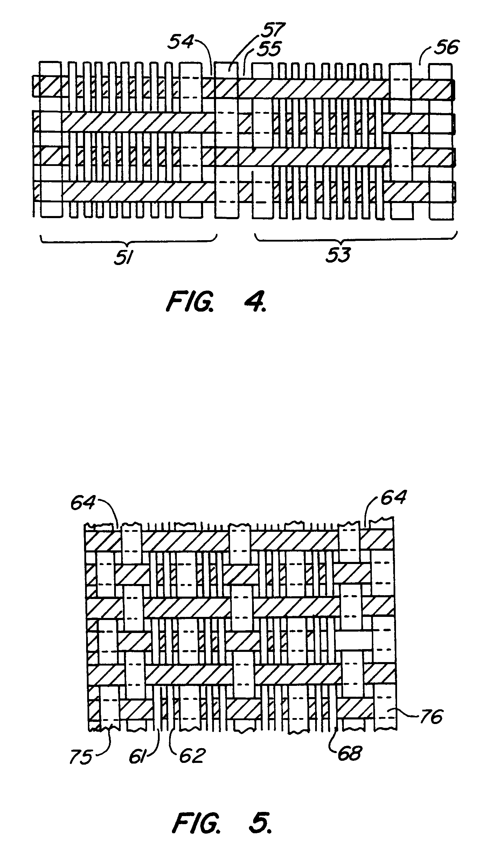

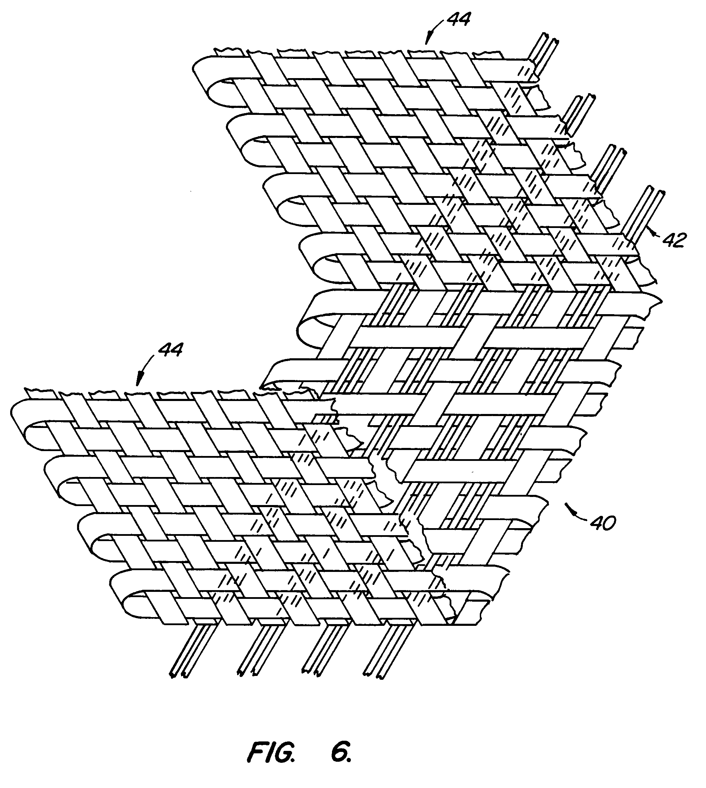

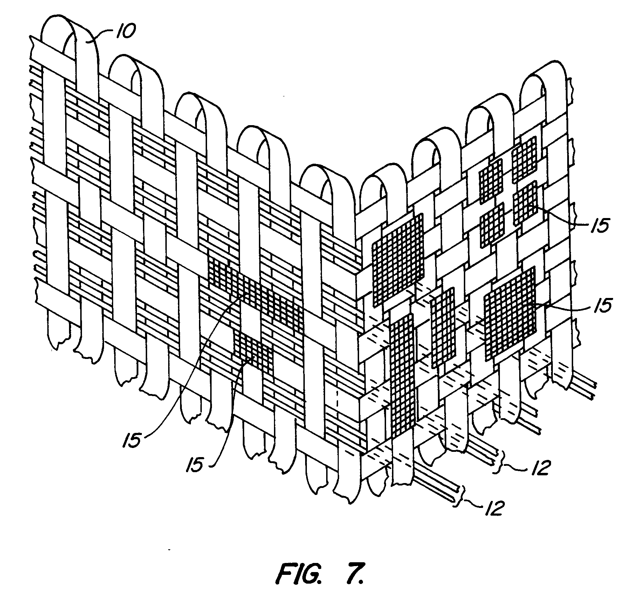

As shown in Figure 1, a premix of cement and sand charged from a bin 1 into a hose 2 at a predetermined rate by means of a discharge unit 3. The premix is transported through the hose 2 by means of compressed air 4 to the nozzle 5. The nozzle 5 is equipped with a water-ring 6 as shown in Figure 2. The water ring has openings 7 which spray a water curtain in front of the premix which is projected through the nozzle. Water is supplied to the water-ring through a pipe 8.

A silica fume slurry having a silica content of 50% by weight or less is fed from a tank 9 through the pipe 8 to the nozzle 5. This silica fume slurry is a commercial product delivered by Elkem a/s under the trademark EMSAC. A present amount of the EMSAC slurry in the tank 9 is continuously fed into the water pipe 8 in order to obtain a slurry of silica fume and water having the predetermined silica fume content. The water pipe 8 is connected to a normal industrial water supply 11. If the available industrial water pressure is too low, the water pressure can be increased by including a high pressure water pump. A valve 10 is arranged to regulate the flow of EMSAC slurry from the tank 9 to the pipe 8. An adjustment of the flow of water will not influence the amount of silica fume added to the shotcrete.

In accordance with the present invention a solution of water and a curing acclerator consisting of a mixture of sodium and potassium aluminate is added to the mixture of water and silica fume at 12. The amount of acclerator is adjusted in order to obtain 5% by weight of the accelerator based on the weight of cement in the final shotcrete mixture.

In practice it has been observed that the addition of accelerator did not cause any problems and the shotcreting process continued for 15 minutes until it was stopped in the normal way. The rebound losses where extremely low, at about 2% of the total amount of sprayed concrete.

In a control experiment, the curing accelerator was mixed with the water at 11. in this case an immediate blockage of water pipe 8 was experienced as soon as the addition of silica fume slurry from the tank 9 was initiated.

## Claims

1. A method for dry shotcreting in which a dry cementitious composition is combined with a mixture of water (11) and silica fume at a spray nozzle (5), characterised by adding a silica fume composition to the water to form a slurry of silica fume and water, adding a mixture of curing accelerator and water to the slurry of silica fume and water, and combining the resulting slurry and dry composition at the spray nozzle (5).

2. A method as claimed in Claim 1, characterised in that the accelerator is selected from sodium aluminate and/or potassium aluminate.

3. A method as claimed in Claim 2, characterised in that the curing accelerator is added in an amount between 1 and 10% by weight based on the weight of cement in the final concrete mixture.

4. A method as claimed in Claim 1, characterised in that the curing acclereator is selected from sodium hydroxide, potassium hydroxide, sodium silicate, water glass and sodium carbonate.

FIG. 1.

FIG. 2.

FIG. 3.

FIG. 4.

FIG. 5.

FIG. 6.

FIG. 7.

| European Patent Office | EUROPEAN SEARCH REPORT | Application Number |
|---|---|---|
| | | EP 92 30 2659 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A,P | GB-A-2 241 499 (SANDOZ LTD.)<br>* the whole document *<br>--- | 1-4 | B28B1/32<br>E04F21/12<br>C04B40/00<br>C04B18/14 |
| A | US-A-4 046 584 (R. C. SNYDER)<br>* the whole document *<br>--- | 1-4 | |
| A | US-A-4 421 797 (R. KOEHNE)<br>* the whole document *<br>--- | 1 | |
| A | US-A-4 046 357 (F. S. TWITCHELL)<br>* the whole document *<br>--- | 1 | |
| A | US-A-3 077 415 (O. J. AYRES)<br>* the whole document *<br>--- | 1-4 | |
| A | US-A-4 934 596 (D. M. HILTON)<br>* the whole document *<br>--- | 1-4 | |
| A | GB-A-2 050 854 (HEIDELBERGER ZEMENT AG)<br>* the whole document *<br>----- | 1-4 | |
| | | | TECHNICAL FIELDS SEARCHED (Int. Cl.5)<br><br>B28B<br>E04F<br>B29C<br>B28C<br>C04B |

The present search report has been drawn up for all claims

| Place of search | Date of completion of the search | Examiner |
|---|---|---|
| THE HAGUE | 10 JULY 1992 | GOURIER P.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)